# EUROPÄISCHE PATENTANMELDUNG

(11) **EP 0 899 504 A2**
(43) Veröffentlichungstag der Anmeldung: **03.03.1999**
(21) Anmeldenummer: 98114931.3
(22) Anmeldetag: 10.08.1998
(51) Int. Cl.: F21V 21/02

(54) **Leuchtengehäuse**

(30) Priorität: 09.08.1997 DE 19734601
(71) Anmelder: Reiss International GmbH, 88069 Tettnang (DE)
(72) Erfinder: Profft, Rudolf, 88079 Kressbronn (DE)
(74) Vertreter: Dreiss, Fuhlendorf, Steimle & Becker

(57) **Zusammenfassung**

Die vorliegende Erfindung betrifft ein Leuchtengehäuse mit einer Befestigungsvorrichtung zum Befestigen des Leuchtengehäuses an einer Befestigungsfläche.

Der Erfindung liegt das Problem zugrunde, die Montage des zu befestigenden Gegenstandes zu vereinfachen.

Die Erfindung löst das zugrunde liegende Problem dadurch, dass die Befestigungsvorrichtung eine Lochscheibe (201) mit mindestens zwei zusammenhängenden Loch-Bereichen (202, 203) mit unterschiedlich großen Öffnungen aufweist. Eine vorteilhafte Ausgestaltung der Lochscheibe (201) wird vor der Montage in eine Haltevorrichtung in dem zu montierenden Gegenstand eingeklipst derart, dass die Lochscheibe (201) in dieser Haltevorrichtung verschiebbar ist.

Die Erfindung ist anwendbar auf dem Gebiet der Befestigungstechnik.

## Beschreibung

Die Erfindung betrifft ein Leuchtengehäuse gemäß dem Oberbegriff von Patentanspruch 1.

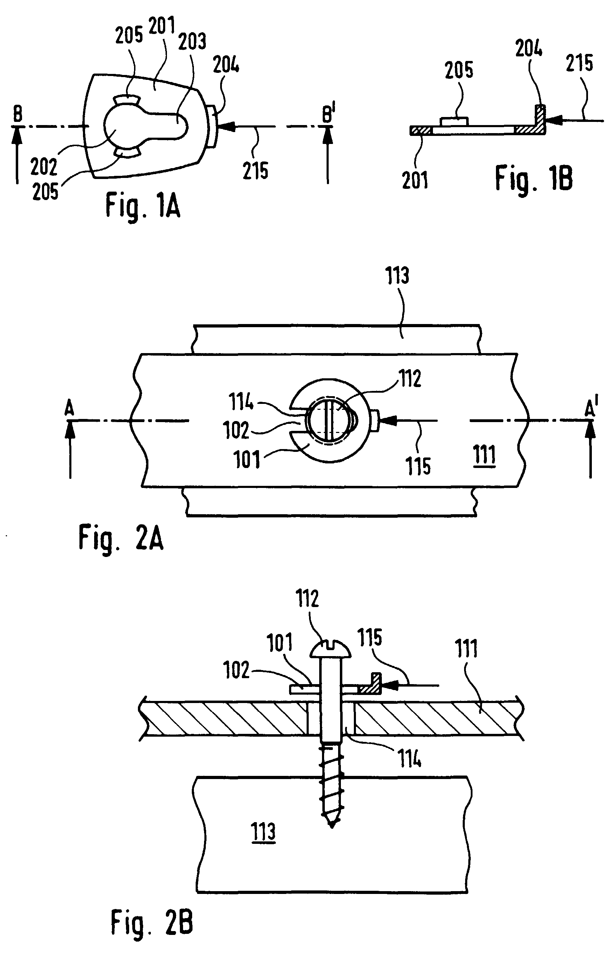

Bei der Wand- oder Deckenmontage von Gegenständen, wie Leuchtengehäusen, mittels einer Schraubverbindung muss üblicherweise der zu befestigende Gegenstand an der Wand oder Decke so ausgerichtet werden, dass eine Öffnung in dem Gegenstand mit einem Loch in der Wand oder Decke zur Deckung kommt. Anschließend wird die Schraube durch die Öffnung des Gegenstands in das Loch in der Wand oder Decke eingeschraubt. Eine Verbesserung dieser Montagetechnik wird durch die Verwendung von sog. Schlitzscheiben erzielt, wie dies in der Figur 2A und 2B dargestellt ist. Dabei wird die Schraube zunächst teilweise in die Wand oder Decke eingedreht. Der zu befestigende Gegenstand weist eine Öffnung auf, die größer als der Schraubenkopf ist. Der Gegenstand wird dann in die Montageposition gebracht, wobei der Schraubenkopf durch die Öffnung des Gegenstandes hindurchtritt. Anschließend wird die Schlitzscheibe zwischen dem Schraubenkopf und der Öffnung eingeschoben, so dass die Schlitzscheibe den Schraubenschaft umfasst. Abschließend wird die Schraube fest eingedreht und der Gegenstand damit fest montiert.

Nachteilig bei dieser Montagetechnik ist, dass es aufwendig und z.T. auch schwierig ist, den Gegenstand in Position zu halten und gleichzeitig die Schlitzscheibe einzuschieben. Außerdem ist nachteilig, dass die Schlitzscheiben bedingt durch ihre konstruktive Gestaltung den mechanischen Belastungen häufig nicht standhalten. Weiterhin ist nachteilig, dass die Schlitzscheiben häufig während des Eindrehens der Schrauben ihre Position verändern oder sogar aus der Montageposition herausfallen. Dies ist insbesondere bei der Deckenmontage von Gegenständen von Nachteil.

Der Erfindung liegt daher das Problem zugrunde, die Schlitzscheibe derart weiter zu entwickeln, dass die vorstehend genannten Nachteile überwunden werden. Es soll ein Leuchtgehäuse mit einer mechanisch stabilen Scheibe bereitgestellt werden, die eine einfache Montage, insbesondere eine einfache Deckenmontage, von Gegenständen ermöglicht. Weiterhin soll die Scheibe mit dem zu montierenden Gegenstand unverlierbar verbunden sein.

Das Problem wird durch die in dem unabhängigen Patentanspruch offenbarte Vorrichtung gelöst. Besondere Ausführungsarten der Erfindung sind in den Unteransprüchen offenbart.

Zunächst ist festzuhalten, dass der Begriff "Scheibe" nachfolgend nicht einschränkend für kreisförmige Gegenstände verwendet wird, sondern vielmehr der äußere Umriss der mit "Scheibe" bezeichneten Gegenstände beliebig sein kann.

Das der Erfindung zugrunde liegende Problem wird durch eine Lochscheibe für die Montage von Gegenständen gelöst, die mindestens zwei zusammenhängende Loch-Bereiche mit unterschiedlich großen Öffnungen aufweist. Vorzugsweise weist die Lochscheibe eine erste, größere Öffnung auf, durch die der Schraubenkopf hindurchtreten kann und eine zweite, kleinere Öffnung auf, deren Größen durch den Schraubenschaft bestimmt wird, insbesondere zwischen der Größe des Schraubenschaftes und der Größe des Schraubenkopfes liegt. Durch eine solche Lochscheibe kann der Schlitz der bekannten Schlitzscheiben entfallen, wodurch die Festigkeit und die mechanische Belastbarkeit derartiger erfindungsgemäßer Lochscheiben deutlich erhöht wird. Weiterhin ist vorteilhaft, dass dadurch Werkstoffe für die Herstellung der Lochscheiben eingesetzt werden können, die eine geringere Festigkeit aufweisen und daher einfacher zu verarbeiten und kostengünstiger herstellbar sind.

Bei einer besonderen Ausführungsart der Erfindung weisen die zusammenhängenden Loch-Bereiche als Ganzes eine Punkt- oder Achsensymmetrie auf. Dies hat den Vorteil, dass derartige Lochscheiben aufgrund der symmetrischen Form einfacher herzustellen sind, und dadurch auch kostengünstiger herzustellen sind. Außerdem sind derartige Lochscheiben universeller einsetzbar, insbesondere muss bei der Montage nicht auf die Orientierung der Lochscheibe geachtet werden.

Bei einer weiteren besonderen Ausführungsart der Erfindung weisen die zusammenhängenden Lochbereiche als Ganzes die Form eines Schlüsselloches auf. Dies ist vorteilhaft, da die Montage und insbesondere die Einschubrichtung einer derartig ausgestalteten Lochscheibe eindeutig und offensichtlich erkennbar ist. Außerdem ist es vorteilhaft, dass eine derartige Schlüsselloch-Scheibe einen günstigen Kräfteverlauf im belasteten, d.h. montierten Zustand aufweist, und damit die mechanische Belastbarkeit erhöht wird.

Bei einer weiteren besonderen Ausführungsart der Erfindung wird die Lochscheibe vor der Montage in eine Haltevorrichtung in dem zu montierenden Gegenstand eingeklipst, vorzugsweise mittels Federlaschen, die an dem zu montierenden Gegenstand angeformt sind, wobei die Lochscheibe in dieser Haltevorrichtung verschiebbar ist. Alternativ dazu kann die Haltevorrichtung auch durch Federbacken an der Lochscheibe realisiert sein, die in ein entsprechendes Gegenstück an den zu montierenden Gegenstand, bspw. in eine Nut, eingreifen. Dies ist vorteilhaft, weil dadurch die Montage des Gegenstandes vereinfacht wird, insbesondere wird die Lochscheibe dadurch unverlierbar mit dem zu montierenden Gegenstand verbunden. Weiterhin ist vorteilhaft, dass trotz der unverlierbaren Verbindung eine nahezu beliebige Verschiebbarkeit der Lochscheibe in Bezug auf den zu montierenden Gegenstand erhalten bleibt. Außerdem ist es vorteilhaft, dass mehrere Haltevorrichtungen an dem zu montierenden Gegenstand vorgesehen werden können, die je nach Bedarf bzw. je nach Montageart mit den erfindungsgemäßen Lochscheiben bestückt werden können.

Bei einer weiteren besonderen Ausführungsart der Erfindung weist die Lochscheibe mindestens ein erstes abgewinkeltes Teil zum manuellen Verschieben der Lochscheibe auf. Dieses erste abgewinkelte Teil dient dem Einkoppeln der für die Verschiebung erforderlichen Kraft und vereinfacht dadurch die Montage. Vorzugsweise kann der erste abgewinkelte Teil ergonomisch geformt sein, bspw. eine dem menschlichen Finger angepasste Form aufweisen.

Bei einer weiteren besonderen Ausführungsart der Erfindung weist die Lochscheibe und der zu montierende Gegenstand mindestens ein Paar zusammenwirkender Rast-Mittel auf, derart, dass die Lochscheibe in mindestens einer Position einrastet. Vorzugsweise ist diese eine Einrast-Position die Position, in welche die Lochscheibe geschoben wird. Alternativ dazu kann die Lochscheibe auch in einer zweiten Position rastbar sein, nämlich in der Position des Anfangszustandes vor der Montage bzw. in einem Auslieferungszustand des zu montierenden Gegenstandes. Dies hat den Vorteil, dass die Lochscheibe vor bzw. während der Montage des Gegenstandes eine definierte Position einnimmt. In einer bevorzugten Ausführungsform der Erfindung sollte die Kraft, die zum Ein- bzw. Ausrasten erforderlich ist, gerade so groß sein, dass sie eine sichere Positionierung der Lochscheibe gewährleistet und dennoch problemlos mit einem Finger aufgebracht werden kann.

Bei einer weiteren vorteilhaften Ausführungsart der Erfindung weist die Lochscheibe mindestens ein zweites abgewinkeltes Teil auf, das mit der Haltevorrichtung des Gegenstandes, insbesondere auch mit den Federlaschen derart zusammenwirkt, dass die Lochscheibe beim Verschieben geführt wird. Dies hat den Vorteil, dass die Lochscheibe beim Verschieben in eine definierte Position eingeschoben wird. Dadurch wird eine exakte und dennoch einfache Montage ermöglicht.

Bei einer weiteren besonderen Ausführungsart der Erfindung wirkt die äußere Form der Lochscheibe mit der Form der Haltevorrichtung des Gegenstandes derart zusammen, dass bei der Montage des Gegenstandes die Position des Loch-Bereiches mit der kleineren Öffnung in Bezug auf eine Öffnung in dem zu montierenden Gegenstand verändert werden kann. Dies ist vorteilhaft, weil dadurch der zu montierende Gegenstand an der Montagefläche exakt und dennoch in beliebiger Richtung ausgerichtet werden kann. Dadurch können vorteilhafter Weise Fehlbohrungen in der Montagefläche in weiten Bereichen korrigiert werden.

Bei einer weiteren besonderen Ausführungsart der Erfindung wirkt die äußere Form der Lochscheibe mit der Form der Haltevorrichtung derart zusammen, dass beim Verschieben die Lochscheibe in Bezug auf eine Öffnung in dem zu montierenden Gegenstand eine vorbestimmte Position einnimmt, bspw. zentriert wird. Dies ist vorteilhaft, weil dadurch der zu montierende Gegenstand in eine exakte und vordefinierte Position in Bezug auf die Montagefläche ausgerichtet wird. Dabei ist insbesondere vorteilhaft, dass diese Ausrichtung ohne zusätzlichen Montageaufwand, allein durch die konstruktive Gestaltung der Lochscheibe in Zusammenwirkung mit der Haltevorrichtung des zu montierenden Gegenstandes erzielt wird.

Bei einer weiteren besonderen Ausführungsart der Erfindung besteht die Lochscheibe aus einem elastischen Werkstoff mit einem dem Montagezweck angepassten Elastizitätsmodul. Der Elastizitätsmodul muss dabei einerseits ausreichend groß sein, um eine sichere und dauerhafte Befestigung zu garantieren, andererseits soll er nicht zu groß sein, damit die Lochscheibe sich bei der Montage gerade so stark verformen kann, dass durch einen eintretenden Federeffekt eine Sicherungswirkung für die Montageverbindung eintritt. Dies ist vorteilhaft, weil dadurch die Lochscheibe gleichzeitig eine Befestigungs- wie auch eine Befestigungssicherungsfunktion übernimmt. Die Lochscheibe besteht vorzugsweise aus einem Metall, bspw. aus einem verzinkten oder anderweitig oberflächenbehandelten Stahlblech, oder einem geeigneten Kunststoff-Werkstoff.

Von der Lehre der vorliegenden Erfindung wird auch ein Gegenstand erfasst, der zu Montagezwecken eine Lochscheibe gemäß einem der beiliegenden Patentansprüche aufweist. Diese Lochscheibe ist in dem Gegenstand verschiebbar angebracht und wird vorzugsweise in den Gegenstand eingeklipst.

Die äußere Umrissform der Lochscheibe kann ebenso wie die Form der Loch-Bereiche der Lochscheibe und die Form der Öffnung in dem zu befestigenden Gegenstand grundsätzlich beliebig sein und insbesondere an die jeweiligen Gegebenheiten und Erfordernisse des zu montierenden Gegenstandes oder der Montagefläche angepasst werden. In vielen Fällen wird es vorteilhaft sein, die Umrissform der Lochscheibe langgestreckt zu wählen, den Lochbereich mit der großen Öffnung kreisrund zu wählen, den Lochbereich mit der kleinen Öffnung langgestreckt zu wählen und die Öffnung in dem zu montierenden Gegenstand kreisrund oder langgestreckt zu wählen.

Weitere Vorteile, Merkmale und Einzelheiten der Erfindung ergeben sich aus den Unteransprüche sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Ein Weg zum Ausführen der beanspruchten Erfindung ist nachfolgend anhand der Zeichnungen im Einzelnen erläutert.
- Figuren 1A und 1B: zeigen eine erfindungsgemäße Lochscheibe in der Draufsicht und im Querschnitt;
- Figuren 2A und 2B: zeigen eine Montageanordnung unter Verwendung einer Schlitzscheibe nach dem Stand der Technik;
- Figuren 3A und 3B: zeigen das Einschieben der erfindungsgemäßen Lochscheibe während der Montage;
- Figuren 4A und 4B: zeigen die Positionierungsmöglichkeiten des zu montierenden Gegenstandes;
- Figuren 5A bis 5G: zeigen verschiedene Ausführungsformen der erfindungsgemäßen Lochscheibe.

Die Figur 2A zeigt eine Draufsicht einer Montageanordnung unter Verwendung einer Schlitzschraube nach dem Stand der Technik. Der zu montierende Gegenstand 111 wird mittels einer Schraube 112 unter Verwendung einer Schlitzscheibe 101 auf der Montagefläche 113 befestigt. Hierzu weist der zu montierende Gegenstand 111 eine Öffnung 114 auf, deren Durchmesser größer ist als der Kopf der Schraube 112. Die Schlitzschraube weist einen Schlitz 102 auf, dessen Weite kleiner ist als der Kopf der Schraube 112, aber größer ist als der Schaft der Schraube 112.

Die Figur 2B zeigt einen Schnitt durch die Anordnung der Figur 2A entlang der Linie A-A'. Bei dem Montagevorgang wird die Schraube 112 zunächst teilweise in die Montagefläche 113 eingedreht. Anschließend wird der zu montierende Gegenstand 111 mit seiner Öffnung 114 über den Schraubenkopf 112 geschoben. Anschließend wird die Schlitzscheibe 110 entsprechend der Richtung 115 zwischen den zu montierenden Gegenstand 111 und den Kopf der Schraube 112 eingeschoben. Abschließend wird die Schraube 112 vollständig eingedreht und dadurch eine feste Verbindung zwischen dem zu montierenden Gegenstand 111 und der Montagefläche 113 hergestellt.

Die Figur 1A zeigt eine Draufsicht auf eine Lochscheibe 201 für die Montage von Gegenständen mit zwei zusammenhängenden Loch-Bereichen 202, 203 mit unterschiedlich großen Öffnungen. Die Öffnung 202 ist größer als der Kopf der für die Montage verwendeten Schraube. Die Öffnung 203 ist kleiner als der Kopf der für die Montage verwendeten Schraube, jedoch größer als der Schaft der für die Montage verwendeten Schraube. Die zusammenhängenden Loch-Bereiche 202, 203 weisen als Ganzes die Form eines Schlüsselloches auf.

Die Figur 1B zeigt einen Querschnitt durch die Lochscheibe 201. Die Lochscheibe 201 weist ein erste abgewinkeltes Teil 204 auf, an dem die zum manuellen Verschieben der Lochscheibe 201 erforderliche Kraft in Richtung 215 angreift. Außerdem weist die Lochscheibe zwei weitere abgewinkelte Teile 205 auf, die mit einer Haltevorrichtung des zu montierenden Gegenstandes derart zusammenwirken, dass die Lochscheibe beim Verschieben geführt wird. Die beiden abgewinkelten Teile 205 sind im Bereich der größeren Öffnung 202 angebracht.

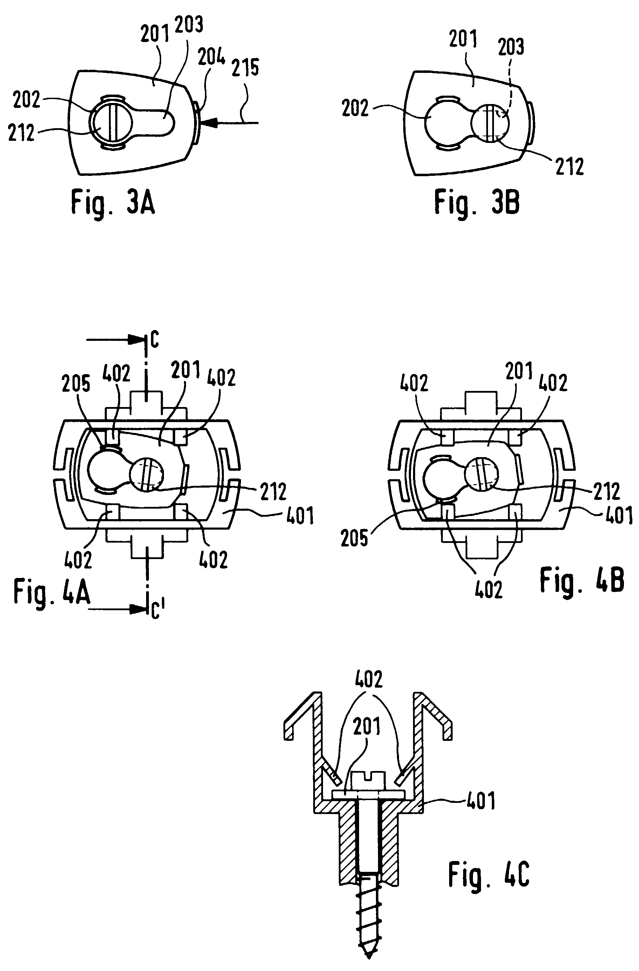

Die Figur 3A zeigt eine erfindungsgemäße Lochscheibe 201 in einer Position, wie Sie zu Beginn des Montagevorganges vorliegt. Die Lochscheibe 201 wird zusammen mit dem zu montierenden Gegenstand derart über die Schraube 212 geschoben, dass die Schraube 212 durch die größere Öffnung 202 der Lochscheibe 201 hindurchtritt. Anschließend wird die Lochscheibe 201 unter Einwirkung einer Kraft in Richtung 215 auf das erste abgewinkelte Teil 204 in eine Position geschoben, wie sie in der Figur 3B dargestellt ist. In der in der Figur 3B dargestellten Position befindet sich die Lochscheibe 201 mit ihrer kleineren Öffnung 203 zwischen dem Kopf der Schraube 212 und dem zu befestigenden Gegenstand, und zwar im Bereich des Schaftes der Schraube 212.

Die Figuren 4A und 4B zeigen wie die äußere Form der Lochscheibe 201 mit der Form einer Haltevorrichtung 401 des zu montierenden Gegenstandes derart zusammenwirkt, dass bei der Montage des Gegenstandes die Position des Lochbereiches mit der kleineren Öffnung im Bezug auf eine Öffnung in dem zu montierenden Gegenstand verändert werden kann.

Die Figur 4A zeigt die erfindungsgemäße Lochscheibe 201, die mittels Federlaschen 402 in die Haltevorrichtung 401 des zu montierenden Gegenstandes eingeklipst ist. Die Lochscheibe 201 ist in der Haltevorrichtung 401 verschiebbar, wobei durch die äußere Form der Lochscheibe, im dargestellten Fall durch die abgewinkelten Mittel 205, in Zusammenwirkung der Form der Haltevorrichtung 401, im dargestellten Beispiel insbesondere in Zusammenwirkung mit den Federlaschen 402, geführt wird. Die Figur 4A zeigt die Anordnung in einer Position, bei der sich die Schraube 212 unterhalb der Mitte der Haltevorrichtung 401 befindet. Dementsprechend ist bei der in der Figur 4A dargestellten Position der zu befestigende Gegenstand aus der mittigen Position etwas nach oben verschoben, um einen entsprechenden Versatz bei der Bohrung in die Montagefläche auszugleichen. Dies wird ermöglicht, durch die konstruktive Ausgestaltung der Lochscheibe 201 und der Haltevorrichtung 401 derart, dass die Lochscheibe 201 innerhalb der Haltevorrichtung 401 nicht nur in Richtung des Einschiebens, sondern auch vertikal dazu verschiebbar ist.

Die Figur 4B zeigt eine Anordnung, bei der sich die Schraube 212 oberhalb der Mitte der Haltevorrichtung 401 befindet. Entsprechend ist in diesem dargestellten Fall die Haltevorrichtung 401 und damit der zu montierende Gegenstand aus einer mittigen Position etwas nach unten verschoben, um einen entsprechenden Versatzfehler bei der Bohrung in die Montagefläche auszugleichen. Auch in diesem Fall wird dies ermöglicht durch eine laterale Beweglichkeit der Lochscheibe 201 innerhalb der Haltevorrichtung 401. Wiederum wird eine Führung durch die Zusammenwirkung der zweiten abgewinkelten Teile 205 der Lochscheibe 201 mit den Federlaschen 402 der Haltevorrichtung 401 erzielt.

Die Figur 4C zeigt einen Schnitt durch die Anordnung der Figur 4A entlang der Linie C-C'. Die Figur 4C zeigt wie die an die Haltevorrichtung 401 angeformten Federlaschen 402 die Lochscheibe 201 gegen Herausfallen sichern.

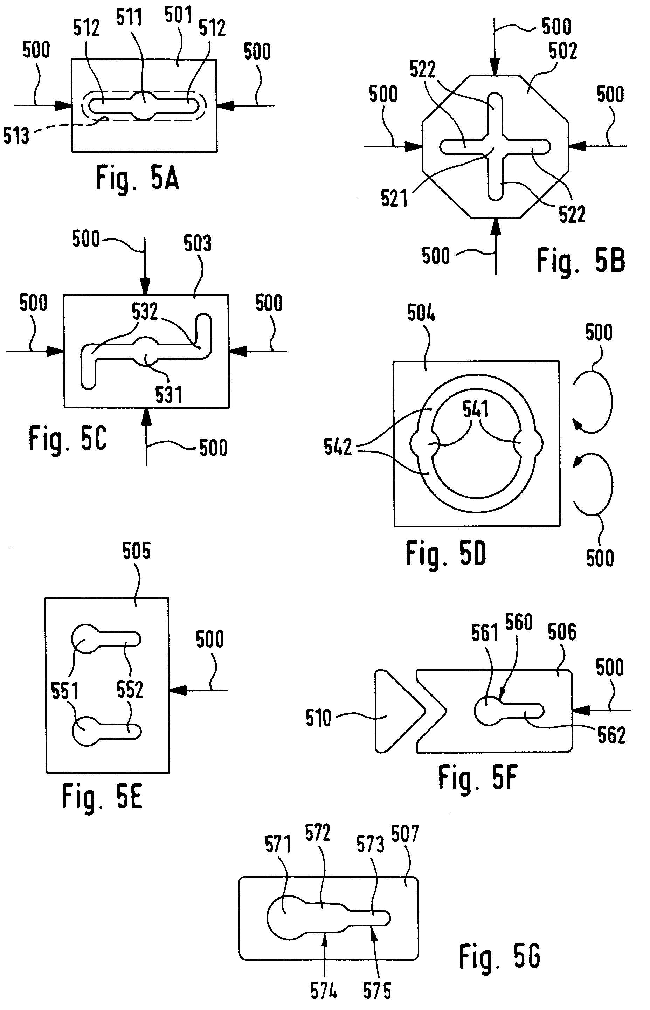

Die Figuren 5A bis 5G zeigen beispielhaft verschiedene Ausgestaltungen der erfindungsgemäßen Lochscheibe.

Die Figuren 5A zeigt eine Lochscheibe 501 mit einem großen mittigen Öffnungsbereich 511 und zwei davon abgehenden kleinen Öffnungsbereichen 512. Weiterhin ist dargestellt die Öffnung 513 in dem zu montierenden Gegenstand. Die Figur 5B zeigt eine Lochscheibe 502 mit einer zentrischen großen Öffnung 521 und vier radial davon ausgehenden kleinen Öffnungsbereichen 522. Die Figur 5C zeigt eine Lochscheibe 503 mit einer mittigen großen Öffnung 531 und zwei davon L-förmig abgehenden kleinen Öffnungen 532. Die Figur 5D zeigt eine Lochscheibe 504 mit zwei beabstandeten großen Öffnungen 541 und zwei halbringförmigen, die beiden großen Öffnungen 541 verbindenden kleinen Öffnungen 542. Die Figur 5E zeigt eine Lochscheibe 505 mit zwei voneinander isolierten, jeweils schlüssellochförmigen Öffnungen, die sich aus jeweils einer großen Öffnung 551 und einer kleinen Öffnung 552 zusammensetzen. Die Figur 5F zeigt eine Lochscheibe 506 mit einer schlüssellochförmigen Öffnung 560, die sich aus einer großen Öffnung 561 und einer kleineren Öffnung 562 zusammensetzt, wobei die Lochscheibe 506 mit einer Positioniervorrichtung 510 derart zusammenwirkt, dass bei Verschieben in der Richtung 500 die Lochscheibe 506 eine vorbestimmte Position einnimmt. Die Figur 5G zeigt eine Lochscheibe 507 mit einer ersten großen Öffnung 571 und einer zweiten 572 und dritten 573 kleineren Öffnung, wobei die zweite 572 und dritte 573 Öffnung eine unterschiedliche Größe aufweisen. Beim Einschieben ist die Lochscheibe 507 vorzugsweise in einer ersten 574 und zweiten 575 Position rastbar.

Die Richtungen 500 geben für alle in den Figuren 5A bis 5G beispielhaft dargestellten Ausführungsarten der erfindungsgemäßen Lochscheibe die möglichen Verschieberichtungen an.

## Patentansprüche

1. Leuchtengehäuse mit einer Befestigungsvorrichtung (401) zum Befestigen des Leuchtengehäuses an einer Befestigungsfläche (111), **dadurch gekennzeichnet**, dass die Befestigungsvorrichtung eine Lochscheibe (201) mit mindestens zwei zusammenhängenden Loch-Bereichen (202, 203) mit unterschiedlich großen Öffnungen aufweist.

2. Leuchtengehäuse nach Anspruch 1, dadurch gekennzeichnet, dass die zusammenhängenden Loch-Bereiche (202, 203) als Ganzes eine Punkt- oder Achsensymmetrie aufweisen.

3. Leuchtengehäuse nach Anspruch 1 oder 2, dadurch gekennzeichnet, dass die zusammenhängenden Loch-Bereiche (202, 203) als Ganzes die Form eines Schlüssellochs aufweisen.

4. Leuchtengehäuse nach einem der Ansprüche 1 bis 3, dadurch gekennzeichnet, dass die Lochscheibe (201) vor der Montage in eine Haltevorrichtung (401) in dem zu montierenden Gegenstand (111) eingeklipst wird, vorzugsweise mittels Federlaschen (402), die an dem zu montierenden Gegenstand (111) angeformt sind, und dass die Lochscheibe (201) in dieser Haltevorrichtung (401) verschiebbar ist.

5. Leuchtengehäuse nach Anspruch 4, dadurch gekennzeichnet, dass die Lochscheibe (201) mindestens ein erstes abgewinkeltes Teil (204) aufweist zum manuellen Verschieben der Lochscheibe (201).

6. Leuchtengehäuse nach Anspruch 4 oder 5, dadurch gekennzeichnet, dass die Lochscheibe (201) und der Gegenstand (111) mindestens ein Paar zusammenwirkender Rast-Mittel aufweisen derart, dass die Lochscheibe (201) in mindestens einer Position einrastet.

7. Leuchtengehäuse nach einem der Ansprüche 4 bis 6, dadurch gekennzeichnet, dass die Lochscheibe (201) mindestens ein zweites abgewinkeltes Teil (205) aufweist, das mit der Haltevorrichtung (401) des Gegenstandes (111), insbesondere auch mit den Federlaschen (402), derart zusammenwirkt, dass die Lochscheibe (201) beim Verschieben geführt wird.

8. Leuchtengehäuse nach einem der Ansprüche 4 bis 7, dadurch gekennzeichnet, dass die äußere Form der Lochscheibe (201) mit der Form der Haltevorrichtung (401) derart zusammenwirkt, dass bei der Montage des Gegenstandes (111) die Position des Loch-Bereiches (203) mit der kleinen Öffnung in Bezug auf eine Öffnung (114) in dem zu montierenden Gegenstand (111) verändert werden kann.

9. Leuchtengehäuse nach einem der Ansprüche 4 bis 7, dadurch gekennzeichnet, dass die äußere Form der Lochscheibe (201) mit der Form der Haltevorrichtung (401) derart zusammenwirkt, dass beim Verschieben der Lochscheibe (201) in Bezug auf eine Öffnung (114) in dem zu montierenden Gegenstand (111) eine vorbestimmte Position einnimmt, bspw. zentriert wird.

10. Leuchtengehäuse nach einem der vorausgegangenen Ansprüche, dadurch gekennzeichnet, dass die Lochscheibe (201) aus einem Werkstoff mit einem an die Montage und/oder an die Sicherung der Montage angepassten Elastizitätsmodul besteht.
